# EUROPEAN PATENT APPLICATION

(11) **EP 1 688 516 A1**
(43) Date of publication of application: **09.08.2006**
(21) Application number: 04819317.1
(22) Date of filing: 17.11.2004
(51) Int. Cl.: C25B 11/04, C25B 1/02, C01B 3/56, H01M 8/02, H01M 4/86, H01M 8/12

(54) **ELECTRODE FOR ELECTROCHEMICAL CELL AND ELECTROCHEMICAL CELL**

(30) Priority: 25.11.2003 JP 2003393252
(71) Applicant: Japan Science and Technology Corporation, Kawaguchi-shi, Saitama 332-0012 (JP)
(72) Inventor: MATSUMOTO, Hiroshige; c/o Faculty of Engineering, Higashi-ku, Fukuoka; 8128581 (JP); TAKAMURA, Hitoshi; c/o School of Engineering of, ku, Sendai-shi, Miyagi;9808579 (JP); MIZUSAKI, Junichiro;c/o Institute of Multidisc, Uni 1-1, Katahira 2-chome, Aoba-ku (JP); KAWADA, Tatsuya; c/o Institute of Multidisciplina, Uni 1-1, Katahira 2-chome, Aoba-ku (JP); YASHIRO, Keiji; c/o Institute of Multidisciplinar, Uni 1-1, Katahira 2-chome, Aoba-ku (JP)
(74) Representative: Koepe, Gerd L.
(86) International application number: PCT/JP2004/017100
(87) International publication number: WO 2005/052215

(57) **Abstract**

[Object] To provide low-overpotential electrodes for an electrochemical cell including a proton-conductive electrolyte and an electrochemical cell including the electrodes.

[Solving Means] The following reaction occurs at the interface between a gas phase and an anode 3:

H₂ → 2H⁺ + 2e⁻

At this time, the resultant protons (H⁺) and electrons (e⁻) exist in the anode 3. The subsequent electrode reaction is completed after the protons travel to an electrolyte 2 and the electrons travel to a lead 5. The reverse reaction occurs at a cathode 4 to generate hydrogen gas.

## Description

### Technical Field

The present invention relates to electrodes for an electrochemical cell including a proton-conductive electrolyte and electrochemical cells, and particularly relates to electrodes and electrochemical cells suitable for high-temperature proton-conductive electrolytes.

### Background Art

Hydrogen has recently come under the spotlight as an energy source for fuel cells etc. in view of global environment conservation and energy saving. Accordingly, as is well known, proton-conductive electrolytes have been widely researched as electrochemical devices useful for hydrogen separation, which is an essential technology for the production of hydrogen, and fuel cells.

Proton-conductive electrolytes are electrolyte materials containing positive hydrogen ions, namely protons, as a mobile ion species. Protons can move in the electrolytes when a voltage is applied. If, therefore, gas electrodes are provided on a proton-conductive electrolyte (hereinafter referred to as a proton-conductive cell), a direct current may be allowed to flow through the cell to achieve hydrogen separation or hydrogen fuel cell power generation according to the type of gas in contact with the electrodes.

Gas electrodes of a proton-conductive cell serve to produce hydrogen-involved electrode reactions. The voltage required as the driving force for the electrode reactions is called electrode overpotential. A lower electrode overpotential allows the proton-conductive cell to operate more efficiently; therefore, materials with lower electrode overpotentials are demanded to achieve higher-performance gas electrodes.

Examples of conventional materials for gas electrodes include porous electron-conductive materials and cermets of electron-conductive materials and electrolytes. Such electrodes are designed exclusively to transfer electrons. For example, techniques for hydrogen separation devices having some type of high-temperature proton conductor as a proton-conductive electrolyte have been proposed (for example, Hiroyasu Iwahara, Solid State Ionics, 125, 271-278(1999)).
Non-Patent Document 1: Hiroyasu Iwahara, Solid State Ionics, 125, 271-278(1999)

According to this technique, the electrodes used are porous platinum electrodes. In this case, it is obvious that platinum is used as an electron-conductive material. If electrodes that serve only to transfer electrons are used for proton-conductive electrolytes, some electrolytes, unfortunately, cause slow hydrogen-involved electrode reactions which result in high electrode overpotential; that is, they require a large electrical energy in order to cause the electrode reactions. In fact, perovskite proton conductors containing zirconium (Zr) that have conventional porous platinum electrodes exhibit extremely poor electrode properties, as shown in Examples below as comparative examples.

### Disclosure of Invention

### Problems to be Solved by the Invention

To solve the above problem, the present invention provides low-overpotential electrodes for electrochemical cells including a proton-conductive electrolyte and an electrochemical cell including the electrodes.

### Means for Solving the Problems

As a result of intensive studies, the present inventor has found and confirmed by experiment that a lower electrode overpotential can be achieved using electrodes that function not only to transfer electrons but also to include protons or hydrogen, thereby completing the following invention:

(1) Electrodes for an electrochemical cell including a proton-conductive electrolyte. The electrodes are an anode and a cathode, and the anode and/or the cathode is made of a solid having hydrogen permeability.

The reactions at gas electrodes are the reactions among hydrogen or a hydrogen-containing compound in a gas, protons, and electrons. These electrode reactions proceed at sites where the three components coexist. Such reaction sites are called three-phase interfaces since the three components usually exist separately as a gas phase, an electrolyte phase, and an electron conductor phase, respectively.

Although the three-phase interfaces should extend only in one dimension in view of their components, the reaction sites where the electrode reactions can occur must extend in at least two dimensions. Accordingly, it is considered that the reaction sites where the electrode reactions can occur actually have some extension at the interface between the gas phase and the electron conductor phase and/or the interface between the gas phase and the electrolyte phase in the vicinity of the three-phase interfaces. For the former combination, some reaction intermediate associated with hydrogen occurs at the interface between the gas phase and the electron conductor phase, and the electrode reactions can proceed through the intermediate. For the latter, on the other hand, the electrode reactions occur probably because the electrolyte phase, which has no inherent electron permeability, exhibits electron permeability to some extent locally at the interface with the gas phase in the vicinity of the electron conductor phase.

The performance of gas electrodes (that is, the magnitude of electrode overpotential) depends on the quantity (area) of three-phase interfaces and the smoothness of the electrode reactions occurring at the three-phase interfaces in a particular quantity (catalytic properties). The performance of the gas electrodes should therefore be achieved by increasing the three-phase interfaces and/or the catalytic properties per unit three-phase interface.

According to the present invention, the anode and/or the cathode is made of the "solid having hydrogen permeability" so that it can function not only to transfer electrons but also to include protons or hydrogen. This allows the interfaces between the electrodes and the gas phase to function as electrode reaction sites and thus provide a lower electrode overpotential.

(2) The electrodes according to Item (1). In this item, the proton-conductive electrolyte has a perovskite structure represented by the general formula ABₓO_{3-d} (wherein 0.8 ≤ x ≤ 1.2); and the B-site elements include zirconium (Zr).

Although the electrodes according to the present invention may in principle be used in combination with any type of proton-conductive electrolyte, they are effective particularly for electrolytes having a perovskite structure including zirconium (Zr) as a B-site element.

High-temperature proton conductors are broadly divided into cerates including Ce as a B-site element and zirconates including Zr as a B-site element. In general, cerate-based electrolytes feature high conductivity but exhibit poor chemical stability and mechanical strength while zirconate-based electrolytes exhibit lower conductivity than cerates but feature excellent stability and strength. Although the introduction of Zr as a B-site element increases the resistance of the electrolyte, it allows the electrolyte to have a smaller thickness because of the high mechanical strength.

(3) The electrodes according to Item (2) above. In this item, the content of zirconium (Zr) in the B-site elements is 20 mole percent or more.

As described above, the chemical stability of proton-conductive electrolytes increases with increasing content of zirconium. It is known that, if proton-conductive electrolytes including barium (Ba) as an A-site element, particularly, contain 20 mole percent or more of zirconium, they are stable with no reaction even against 100% carbon dioxide.

(4) The electrodes according to any of Items (1) to (3). In this item, the solid having hydrogen permeability is a mixed proton-electron conductor.

The "solid having hydrogen permeability" used may be the "mixed proton-electron conductor." The use of the mixed proton-electron conductor allows the electrodes to function not only to transfer electrons but also to include protons.

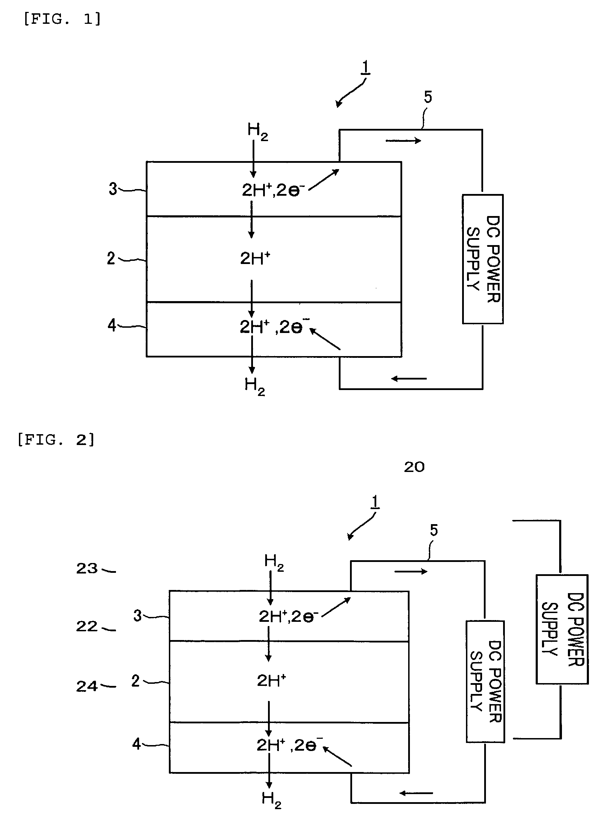

Fig. 1 is a schematic diagram of electrode reactions in the case where a mixed proton-electron conductor is used for the electrodes for an electrochemical cell 1. The following reaction occurs at the interface between a gas phase and an anode 3:

H₂ → 2H⁺ + 2e⁻

At this time, the resultant protons (H⁺) and electrons (e-) exist in the anode 3. The subsequent electrode reaction is completed after the protons travel to an electrolyte 2 and the electrons travel to a lead 5. The reverse reaction occurs at a cathode 4 to generate hydrogen gas. These actions allow the interfaces between the electrodes and the gas phase to function as electron reaction sites and thus provide a lower electrode overpotential.

(5) The electrodes according to Item (4). In this item, the mixed proton-electron conductor is a mixed proton-electron conductive ceramic material having the perovskite structure.

Naturally, electrodes and electrolytes are made of different materials. Many combinations of them cause problems, including delamination due to differences in physical properties, such as thermal expansion coefficient, and degraded electrode performance due to chemical properties, such as mutual reactivity and differences in oxidation-reduction properties. Such incompatibility between electrodes and electrolytes can empirically often be minimized using the same structure for them. The use of an electrolyte having a perovskite structure in combination with electrodes having the same structure is extremely effective.

(6) The electrodes according to any of Items (1) to (3) above. In this item, the solid having hydrogen permeability is a hydrogen storage alloy.

The "solid having hydrogen permeability" used may be the "hydrogen storage alloy." The use of the hydrogen storage alloy allows the electrodes to function not only to transfer electrons but also to include atomic hydrogen.

Fig. 2 is a schematic diagram of electrode reactions in the case where a hydrogen storage alloy is used for the electrodes for an electrochemical cell 20. The following reaction occurs at the interface between a gas phase and an anode 23:

H₂ → 2H

At this time, hydrogen (H) exists in the anode 23 (probably in atomic form). The resultant hydrogen undergoes the following reaction at the interface between the anode 23 and an electrolyte 22:

H₂ → 2H⁺ + 2e⁻

The subsequent electrode reaction is completed after the protons travel to the electrolyte 22 and the electrons travel to a lead 25. The reverse reaction occurs at a cathode 24 to generate hydrogen gas. These electrodes are provided not only with the function of transferring electrons but also with the function of including protons or hydrogen. These actions allow the interfaces between the electrodes and the gas phase to function as electron reaction sites and thus provide a lower electrode overpotential.

(7) The electrodes according to Item (6). In this item, the hydrogen storage alloy contains palladium (Pd).

Palladium can store hydrogen, as is well known, and can also provide stable electrode properties since it is a noble metal, that is, a stable metal with high resistance to oxidation.

(8) The electrodes according to Item (7). In this item, the hydrogen storage alloy contains 10% or more of palladium (Pd).

The above-described hydrogen storage ability and stability of palladium can also be achieved for an alloy containing the above amount of palladium, and thus the alloy can provide stable electrode properties.

(9) The electrodes according to any of Claims 1 to 3. In this item, the solid having hydrogen permeability is a mixture of a mixed proton-electron conductor and a hydrogen storage alloy.

The "solid having hydrogen permeability" used may be a mixture of the "mixed proton-electron conductor" and the "hydrogen storage alloy." The two materials, as described above, function not only to transfer electrons but also to include protons or hydrogen, and thus the mixture thereof has the same functions.

The mixing ratio between the two materials may be suitably selected according to the type of proton-conductive electrolyte.

(10) The electrodes according to Item (9) above. In this item, the mixed proton-electron conductor is a mixed proton-electron conductive ceramic material having the perovskite structure, and the hydrogen storage alloy contains palladium (Pd).

(11) An electrochemical cell including the proton-conductive electrolyte and the electrodes according to any of Items (1) to (10) above.

### Advantages

The use of the electrodes according to the above invention in combination with a proton-conductive electrolyte can achieve an electrochemical cell with low electrode overpotential.

### Best Mode for Carrying Out the Invention

Examples of the present invention will now be specifically described.

### EXAMPLE 1

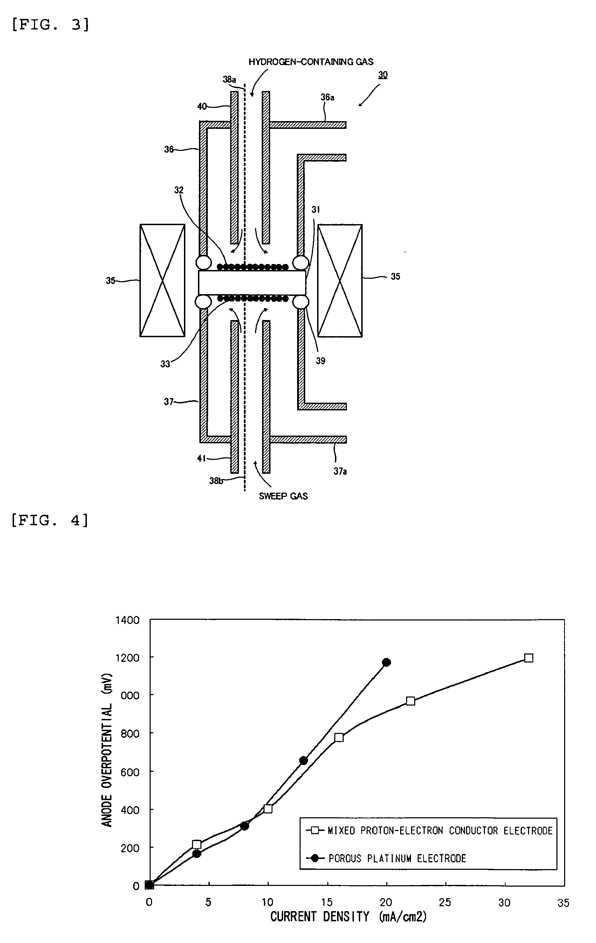

Hydrogen pumping was performed using a proton-conductive cell including electrodes made of a mixed proton-electron conductive ceramic material to evaluate its hydrogen separation performance. Fig. 3 is a schematic diagram of a performance evaluation apparatus.

The electrolyte used was a proton-conductive ceramic material having the composition SrZr_{0.9}Y_{0.1}O₃₋ₐ (wherein a indicates the amount of loss of oxygen). This electrolyte was disc-shaped and had a diameter of about 13.5 mm and a thickness of 0.5 mm. A mixed proton-electron conductive ceramic material (SrZr_{0.85}Y_{0.1}Ru_{0.05}O₃₋ₐ) was then deposited in the center of each side of the disc-shaped electrolyte 31 by pulsed laser deposition (PLD) to form an anode 32 and a cathode 33 that were circular and had a diameter of 8 mm and a thickness of about 0.2 to 0.5 µm. The anode 32 and the cathode 33 were connected to leads 38a and 38b, respectively, through platinum nets for current collection and a platinum paste (neither is shown). A platinum electrode (not shown) was connected to the outside of the disc-shaped electrolyte 31 as a reference electrode. Thus an electrochemical cell including the electrolyte 31, the anode 32, and the cathode 33 was formed. The reference electrode was provided as a standard for measuring the potentials of the anode 32 and the cathode 33; it does not directly affect the electrochemical function of the proton-conductive cell. The electrochemical cell 34 was held vertically between ceramic tubes 36 and 37 with annular sealing members 39 disposed therebetween to define an anode chamber 36a and a cathode chamber 37a. The ceramic tube 36 had a gas-feeding tube 36b and a gas outlet 36c, and the ceramic tube 37 had a gas-feeding tube 37b and a gas outlet 37c.

The electrochemical cell 34 was placed in an electric furnace 35 which was kept at 800°C to carry out a hydrogen pumping test described below. Pure hydrogen and an argon gas containing 1% hydrogen were fed into the anode 32 and the cathode 33, respectively, at a gas flow rate of 30 mL/min. These gases were wetted with saturated steam at 17°C (the partial pressure of the steam was about 1,900 Pa) to prevent the reduction of the electrolyte 31. The anode gas serves to supply the hydrogen to be pumped to the electrochemical cell while the cathode gas serves to sweep the hydrogen generated in the cathode chamber by hydrogen pumping. The cathode sweep gas contained 1% hydrogen for convenience of potential measurement.

While the gases were fed as described above, a DC power supply was connected to the leads 38a and 38b to supply a predetermined current from the anode 32 to the cathode 33. The concentration of hydrogen in the gas from the cathode gas outlet 37c was measured by gas chromatography to determine the rate of hydrogen pumped from the anode chamber 36a to the cathode chamber 37a by supplying the current, namely the rate of hydrogen generated at the cathode 33.

The electrode properties of the anode 32 and the cathode 33 were measured by current interruption. The measurement procedure is as follows. The potentials of the anode 32 and the cathode 33 relative to that of the reference electrode were measured under open-circuit conditions (with no current flowing) and with a predetermined current flowing. The overpotential (ohmic loss) due to the resistance of the electrolyte, which was measured by current interruption, was deducted from the differences between the potentials at the individual electrodes with the current flowing and those at the individual electrodes under the open-circuit conditions to determine the anode overpotential and the cathode overpotential.

The evaluation results are shown in Figs. 4 to 6.

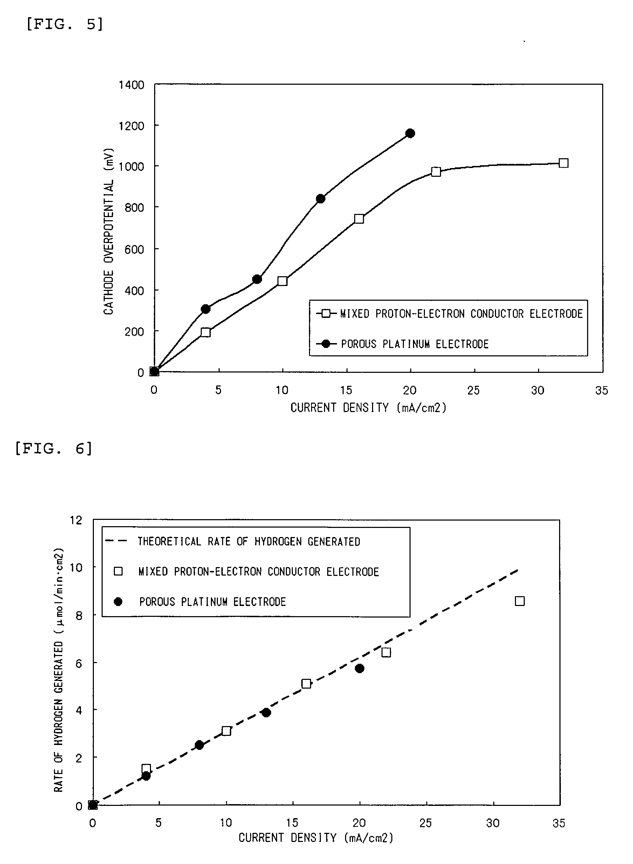

Fig. 4 is a graph showing a comparison of the overpotential of the anode made of the mixed proton-electron conductive ceramic material and that of a conventional porous platinum electrode under the same conditions. Fig. 5 is a graph showing a similar comparison of cathode overpotentials. The two graphs show that the electrodes made of the mixed proton-electron conductive ceramic material exhibited a lower overpotential than the conventional porous platinum electrodes.

Fig. 6 is a graph showing a comparison of the rates of hydrogen generated, plotted against current densities, for the above electrodes. The theoretical rate of hydrogen generated, indicated by the dashed line in the graph, was calculated according to Faraday's law, that is, the rate of hydrogen generated when all current flowing is utilized for hydrogen pumping. The electrolyte used as a proton-conductive electrolyte in this example, SrZr_{0.9}Y_{0.1}O₃₋ₐ, can pump hydrogen only at limited current densities depending on the performance of the electrodes used. If any larger current is applied, a current caused by electron conduction flows through the electrolyte. This current, however, does not contribute to hydrogen pumping. For this reason, the rate of hydrogen generated when the conventional porous platinum electrodes were used already started to deviate from the theoretical rate of hydrogen generated at a current density of 13 mA/cm². On the other hand, the measured rate of hydrogen generated when the electrodes made of the mixed proton-electron conductive ceramic material were used coincided with the theoretical rate of hydrogen generated even at a current density of 16 mA/cm² because the electrode performance was improved, as shown in Figs. 4 and 5.

The above results clearly proved that the electrodes made of the mixed proton-electron conductive ceramic material were superior to the conventional electrodes.

### EXAMPLE 2

Next, hydrogen storage alloy electrodes and the same apparatus as in Example 1 were used to evaluate the hydrogen separation performance. Example 2 is different from Example 1 in that the gas electrodes used were made of palladium, which can store hydrogen. Palladium was deposited in the center of each side of a disc-shaped electrolyte by sputtering to form the anode 32 and the cathode 33, which were circular and had a diameter of 0.8 mm and a thickness of about 1 µm. The other parts of the apparatus and the evaluation method used are not described since they are the same as in Example 1.

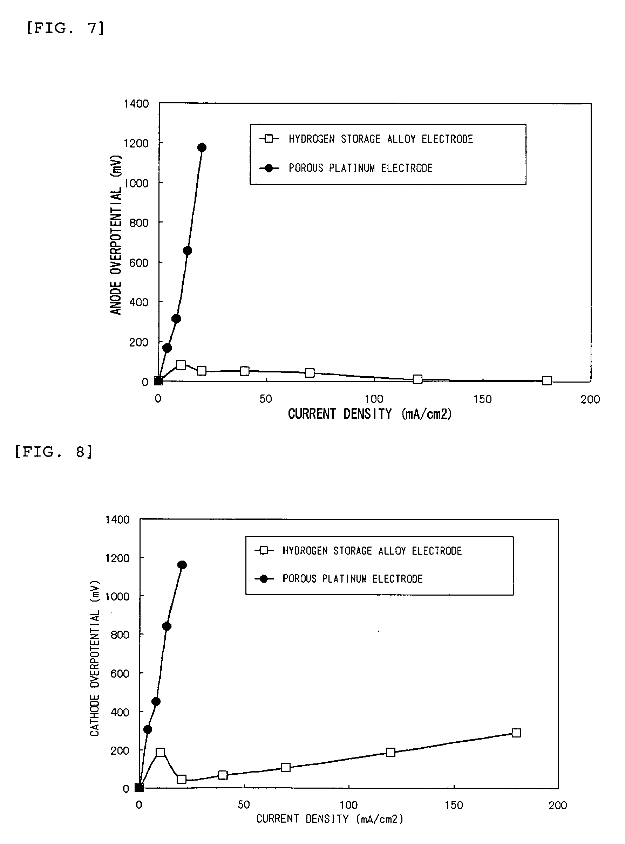

The evaluation results are shown in Figs. 7 to 9.

Fig. 7 is a graph showing a comparison of the overpotential of the palladium anode and that of a conventional porous platinum electrode under the same conditions. Fig. 8 is a graph showing a similar comparison of cathode overpotentials. The two graphs show that the palladium electrodes exhibited a lower overpotential than the conventional porous platinum electrodes.

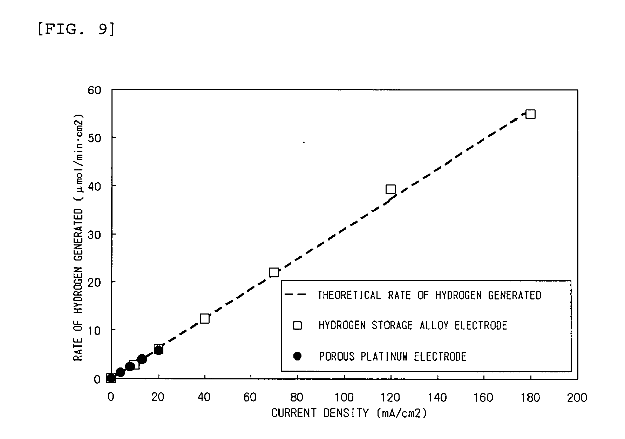

Fig. 9 is a graph showing a comparison of the rates of hydrogen generated, plotted against current densities, for the above electrodes. The theoretical rate of hydrogen generated, indicated by the dashed line in the graph, is the same as in Example 1. The rate of hydrogen generated when the conventional porous platinum electrodes were used, as shown in Example 1, already started to deviate from the theoretical rate of hydrogen generated at a current density of 13 mA/cm². On the other hand, the measured rate of hydrogen generated when the palladium electrodes were used coincided with the theoretical rate of hydrogen generated even at a current density of 180 mA/cm² because the electrode performance was improved, as shown in Figs. 7 and 8.

The above results proved the superiority of the hydrogen storage alloy electrodes.

### Industrial Applicability

The present invention can be widely applied to electrochemical devices used for hydrogen separation for hydrogen production and fuel cells.

### Brief Description of the Drawings

[Fig. 1] Fig. 1 is a schematic diagram of electrode reactions in the case where a hydrogen storage alloy mixed proton-electron conductor is used for the electrodes for a proton-conductive electrolyte.
[Fig. 2] Fig. 2 is a schematic diagram of electrode reactions in the case where a hydrogen storage alloy is used for the electrodes for a proton-conductive electrolyte.
[Fig. 3] Fig. 3 is a diagram of an evaluation apparatus in Example 1.
[Fig. 4] Fig. 4 is a graph showing anode overpotentials according to the results of hydrogen separation performance evaluations in Example 1.
[Fig. 5] Fig. 5 is a graph showing cathode overpotentials according to the results of the hydrogen separation performance evaluations in Example 1.
[Fig. 6] Fig. 6 is a graph showing the rates of hydrogen generated according to the results of the hydrogen separation performance evaluations in Example 1.
[Fig. 7] Fig. 7 is a graph showing anode overpotentials according to the results of hydrogen separation performance evaluations in Example 2.
[Fig. 8] Fig. 8 is a graph showing cathode overpotentials according to the results of the hydrogen separation performance evaluations in Example 2.
[Fig. 9] Fig. 9 is a graph showing the rates of hydrogen generated according to the results of the hydrogen separation performance evaluations in Example 2. Reference Numerals

1, 20, and 34: electrochemical cell
2, 22, and 31: electrolyte
3, 23, and 32: anode
4, 24, and 33: cathode
35: electric furnace
36a: anode chamber
36b: gas-feeding tube
37a: cathode chamber
37c: cathode gas outlet

## Claims

1. Electrodes for an electrochemical cell including a proton-conductive electrolyte, the electrodes being an anode and a cathode, the anode and/or the cathode comprising a solid having hydrogen permeability.

2. The electrodes according to Claim 1, wherein the proton-conductive electrolyte has a perovskite structure represented by the general formula ABₓO_{3-d} (wherein 0.8 ≤ x ≤ 1.2; and d is a deviation from the nominal value of oxygen, namely 3); and the B-site elements include zirconium (Zr).

3. The electrodes according to Claim 2, wherein the content of zirconium (Zr) is 20 mole percent or more.

4. The electrodes according to any of Claims 1 to 3, wherein the solid having hydrogen permeability is a mixed proton-electron conductor.

5. The electrodes according to Claim 4, wherein the mixed proton-electron conductor is a mixed proton-electron conductive ceramic material having the perovskite structure.

6. The electrodes according to any of Claims 1 to 3, wherein the solid having hydrogen permeability is a hydrogen storage alloy.

7. The electrodes according to Claim 6, wherein the hydrogen storage alloy comprises palladium (Pd).

8. The electrodes according to Claim 7, wherein the hydrogen storage alloy comprises 10% or more of palladium (Pd).

9. The electrodes according to any of Claims 1 to 3, wherein the solid having hydrogen permeability is a mixture of a mixed proton-electron conductor and a hydrogen storage alloy.

10. The electrodes according to Claim 9, wherein the mixed proton-electron conductor is a mixed proton-electron conductive ceramic material having the perovskite structure; and the hydrogen storage alloy comprises palladium (Pd).

11. An electrochemical cell comprising the proton-conductive electrolyte and the electrodes according to any of Claims 1 to 10.
